# EUROPÄISCHE PATENTSCHRIFT

(11) **EP 2 369 805 B1**
(45) Veröffentlichungstag und Bekanntmachung des Hinweises auf die Patenterteilung: **19.07.2017**
(21) Anmeldenummer: 10010505.5
(22) Anmeldetag: 24.09.2010
(51) Int. Cl.: H04L 29/06, H04L 29/08

(54) **Verfahren zur Konfigurieruing und Verteilung von Zugriffsrechten in einem verteilten System**
Method for configuring and distributing access rights in a distributed system
Procédé de configuration et de répartition de droits d'accès dans un système réparti

(30) Priorität: 17.03.2010 EP 10002790
(43) Veröffentlichungstag der Anmeldung: 28.09.2011
(73) Patentinhaber: ABB Schweiz AG, 5400 Baden (CH)
(72) Erfinder: Mohr, Sven, 68159 Mannheim (DE); Berkes, Uwe, 67373 Dudenhofen (DE)
(74) Vertreter: Marks, Frank

(56) Entgegenhaltungen:
- WO-A2-2006/126191
- WO-A2-2007/008852
- US-A1- 2007 283 011

## Beschreibung

Die Erfindung bezieht sich auf ein Verfahren zur Konfiguration und Verteilung von Zugriffsrechten für in einem verteilten System angeordnete intelligente elektronische Geräte. Außerdem bezieht sich die Erfindung auf eine Vorrichtung zur Durchführung des Verfahrens. Die Erfindung findet insbesondere Verwendung in Netzleit- und Stationsautomatisierungssystemen, die beispielsweise in Versorgungssystemen für Strom, Gas, Wasser, Öl oder Fernwärme eingesetzt werden, ist aber auch für abgeschlossene Industrieanlagen geeignet.

Intelligente elektronische Geräte, auch Intelligent Electronic Devices (IED) genannt, sind mikroprozessorbasierte Geräte, die beispielsweise in fernüberwachten verteilten Systemen zum Einsatz kommen. Zu diesen Geräten zählen unter anderem Fernwirkunterstationen, auch Remote Terminal Unit (RTU) genannt, Schutzgeräte sowie intelligente Schaltgeräte und Spannungsregler in Mittel- und Hochspannungsanlagen.

In den bekannten Netzleitsystemen wird über eine Kommunikationsverbindung die Netzleitstelle mit den Remote Terminal Units verbunden. Die von einer Prozess- oder Anlagensteuerung bereitgestellten Prozessdaten werden, vorzugsweise in Echtzeit, aus den räumlich voneinander entfernten Teilen einer technischen Anlage bzw. des technischen Prozesses über die RTU's zur Leitstelle übertragen. Dabei werden nicht nur Alarme bezüglich gefährlicher Prozesszustände generiert sondern auch Aufzeichnung aller wesentlichen Ereignisse innerhalb des verteilten Systems aufbereitet und der Netzleitstelle von den RTU's bereitgestellt.

Der Zugriff auf die in den Remote Terminal Units abgelegten Daten und/oder die Bedienung dieser Geräte ist üblicherweise über einen Passwortschutz bzw. einen Nutzer- Account geschützt, wobei der dem jeweiligem Gerät zugeordnete Passwortschutz aus einem Benutzerkonto bereitgestellt wird. Gemäß dem Stand der Technik wird der Passwortschutz für jedes Gerät einzeln konfiguriert.

Das Benutzerkonto ist in den Remote Terminal Unit's (RTU) des Netzleitsystems jeweils als eine Datei, in welcher der User- Account integriert ist, abgelegt. Der User-Account umfasst unter anderem den Namen des berechtigten Nutzers, ein zugeordnetes Passwort sowie Zugriffsrechte bzw. die Zugriffserlaubnis auf bestimmte Funktionen, wie beispielsweise die Erlaubnis Änderungen in der Konfiguration der RTU vorzunehmen. Diese Datei wird üblicherweise in einem verschlüsselten Format in einem wiederbeschreibbaren nichtflüchtigem Speicher des RTU abgelegt, so dass der Nutzer der RTU, beispielsweise erst nach Eingabe eines Passwortes, Zugriff auf die vom Gerät erfassten Daten bzw. auf die Bedienung des Gerätes hat.

Da die Konfiguration des User- Accounts auf jedem Gerät individuell ausgeführt wird, ist die Verwaltung der Zugriffsrechte für die Geräte des verteilten Systems mit einem erheblichen zeitlichen Aufwand verbunden. Insbesondere Änderungen bezüglich der Zugriffsrechte gestalten sich als sehr aufwendig, da die Konfigurationen der Zugriffsrechte für jedes von der Änderung betroffene Gerät separat auszuführen sind. US2007/0283011 und WO2006/126191 sind weiterer Stand der Technik. Der Erfindung liegt daher die Aufgabe zugrunde, ein Verfahren und eine Vorrichtung zur Konfigurierung und Verteilung von Zugriffsrechten, die in Benutzer- Accounts abgelegt sind, auf in einem verteilten System angeordneten intelligenten Geräte anzugeben, welche die vorgenannten Nachteile vermeiden. Insbesondere sind das erfindungsgemäß Verfahren und die erfindungsgemäße Vorrichtung dafür vorgesehen, die Benutzer-Accounts für den Zugriff und/oder die Bedienung der Geräte gleichzeitig auf einer Vielzahl der intelligenten Geräte, insbesondere der Remote Terminal Units, des verteilten Systems zu verteilen.

Diese Aufgabe wird durch ein Verfahren zur Konfigurierung und Verteilung von Zugriffsrechten auf intelligente Geräte innerhalb eines verteilten Systems mit den im Anspruch 1 angegebenen Merkmalen gelöst. Vorteilhafte Ausgestaltungen und eine Vorrichtung zur Ausführung des Verfahrens sind in weiteren Ansprüchen angegeben.

Zur Konfigurierung und Verteilung von Zugriffsrechten auf die innerhalb eines verteilten Systems eines technischen Prozesses oder einer technischen Anlage, insbesondere eines Netzleitsystems, angeordneten intelligente Geräte ist wenigstens ein erstes intelligentes Gerät vorgesehen, dass mittels eines Web- Clients, der als User-Schnittstelle, Kommunikationsdienst oder Bedienschnittstelle ausgeführt sein kann, über eine Netzwerkverbindung mit weiteren intelligenten Geräten des verteilten Systems verbunden ist. Zu den Geräten des verteilten Systems werden aus räumlich voneinander entfernten Teilen der technischen Anlage oder des technischen Prozesses bereitgestellte Prozess- und/oder Anlagendaten, vorzugsweise in Echtzeit, übertragen.

Das erfindungsgemäße Verfahren zur Konfiguration und Verteilung der Zugriffsrechte auf die intelligenten Geräte des verteilten Systems umfasst folgende Verfahrenssch ritte:
In einem vorbereitenden Schritt wird in den intelligenten Geräten des verteilten Systems jeweils ein geräteinterner individueller Schlüssel zur verschlüsselten Speicherung einer Passwortdatei im Gerät und ein gemeinsamer Schlüssel, welcher von den im verteilten System angeordneten intelligenten Geräten verstanden wird, abgelegt.

In einem ersten Schritt wird über den, vorzugsweise im ersten Gerät integrierten beziehungsweise mit dem ersten Gerät zusammenwirkenden Web-Client in dem ersten Gerät ein als User- Account oder Benutzer- Account bezeichnetes Benutzerkonto angelegt und konfiguriert. Als Web-Client kann eine separate Datenverarbeitungseinrichtung, wie beispielsweise ein PC, vorgesehen sein, welche an die intelligenten Geräte des verteilten Systems mittels einer Netzwerkverbindung, beispielsweise auch einem drahtlosem Netzwerk, anschließbar ist.

Im User- Account sind beispielsweise ein Name des Users, ein Passwort und/oder Zugriffsrechte festgelegt, mit denen ein direkter Zugriff auf das Gerät ohne Berechtigung vermieden wird. Der Benutzer- Account wird dabei mittels des individuellen geräteinternen Schlüssels des ersten Gerätes verschlüsselt als Passwortdatei in einem im ersten Gerät vorgesehenem Speichermodul, vorzugsweise einem wiederbeschreibbaren nichtflüchtigem Speicher, abgelegt.

In einem zweiten Schritt wird die den User-Account aufweisende Passwortdatei vor dem Auslesen in den Web- Client mittels des gemeinsamen Schlüssels, welcher von den weiteren im System angeordneten intelligenten Geräten verstanden wird, verschlüsselt und die nunmehr mit dem gemeinsamen Schlüssel verschlüsselte Passwortdatei mit dem Benutzer- Account wird dem Web- Client zur Übertragung auf die weiteren intelligenten Geräte bereitgestellt.

Über die Netzwerkverbindung wird in einem weiteren Schritt die verschlüsselte Passwortdatei vom Web- Client auf die weiteren im System angeordneten intelligente Geräte verteilt. Die Übertragung der Passwortdatei zwischen dem Web- Client und den intelligenten Geräten innerhalb des verteilten Systems kann beispielsweise mittels einer seriellen Datenübertragung oder über ein TCP/IP- Protokoll ausgeführt werden.

In einem letzten Schritt werden die in der zuvor vom Web-Client übertragenen verschlüsselten Passwortdatei abgelegten Daten mittels des gemeinsamen Schlüssels in den weiteren intelligenten Geräten entschlüsselt. Danach wird mittels des geräteinternen Schlüssels des jeweiligen Gerätes eine verschlüsselte Speicherung der Passwortdatei mit den zuvor entschlüsselten Daten im jeweils weiteren intelligenten Gerät ausgeführt.

Die Erfindung ermöglicht es somit in vorteilhafter Weise, den Aufwand bei der Verwaltung und Verteilung der Benutzerkonten auf einer Vielzahl von Geräten des verteilten Systems zu minimieren, da nunmehr nur noch in einem ersten Gerät der Benutzer- Account erstellt bzw. konfiguriert werden muss und der Benutzer- Account danach auf die weiteren im verteilten System angeordneten intelligenten Geräte verteilt wird ohne dass weitere sicherheitsrelevante Maßnahmen zur Vermeidung eines unbefugten Zugriffes auf die Geräte erforderlich sind.

In einer vorteilhaften Ausgestaltung des erfindungsgemäßen Verfahrens wird der User Account über den geräteinternen Web- Server des ersten Gerätes nur auf alle weiteren im System angeordneten als Web- Server arbeitenden Geräte eines dem erstem Gerät entsprechendem Gerätetyps gleichzeitig verteilt. In diesem Fall sind in den Geräten eines gleichen Gerätetyps jeweils die gleichen gemeinsamen gerätetypischen Schlüssel abgelegt. In den Geräten eines anderen Gerätetyps sind entsprechend weitere gemeinsame diesem Gerätetyp entsprechende Schlüssel abgelegt.

Eine Vorrichtung zur Ausführung des vorab beschriebenen Verfahrens ist dem Anspruch 7 zu entnehmen.

Die Vorrichtung zur Konfigurierung und Verteilung von Zugriffsrechten auf intelligente Geräte innerhalb eines verteilten Systems eines technischen Prozesses oder einer technischen Anlage umfasst wenigstens ein erstes intelligentes Gerät, dass mittels eines Web- Clients über eine Netzwerkverbindung mit weiteren intelligenten Geräten kommuniziert und zu den intelligenten Geräten aus räumlich voneinander entfernten Teilen der technischen Anlage oder des technischen Prozesses bereitgestellte Prozess- und/oder Anlagendaten übertragbar sind.

Die intelligenten Geräte weisen jeweils wenigstens ein erstes, vorzugsweise als RAM- Speicher ausgeführtes Speichermodul und jeweils ein zweites als CF- Karte ausgeführtes Speichermodul auf. Der RAM- Speicher ist mit einer internen Datenstruktur zur Ablage der Daten eines Passwortfiles ausgestattet.

Im ersten Speichermodul ist jeweils ein von den intelligenten Geräten des verteilten Systems lesbarer bzw. verstandener gemeinsamer Schlüssel abgelegt. Im zweiten Speichermodul ist jeweils ein geräteinterner individueller Schlüssel abgelegt, der nur vom jeweiligen Gerät lesbar ist bzw. verstanden wird.

Mittels des mit dem ersten Gerät zusammenwirkenden Web-Clients ist im ersten Gerät ein Benutzer- Account angelegt und konfiguriert, der als Datei für die Ablage bzw. Speicherung im Speichermodul des ersten Gerätes vorgesehen ist.

Der im ersten Gerät abgelegte erste geräteinterne Schlüssel ist dafür vorgesehen vor einer Ablage des Benutzer- Accounts als Passwortdatei im zweiten Speichermodul den Benutzer- Account zu verschlüsseln.

Der im ersten Gerät abgelegte gemeinsame Schlüssel ist dafür vorgesehen die Daten der Passwortdatei, die auf die weiteren im verteilten System angeordneten intelligenten Geräte verteilt werden sollen vor dem Auslesen in den Web- Client zu verschlüsseln.

Nachdem der Web- Client über die Netzwerkverbindung die mittels des gemeinsamen Schlüssels verschlüsselte Passwortdatei auf die weiteren intelligenten Geräte verteilt hat, entschlüsselt der in den weiteren intelligenten Geräten abgelegte gemeinsame Schlüssel die in der verschlüsselten Passwortdatei abgelegten Daten.

Bevor diese Daten zur Speicherung im zweiten Speichermodul des jeweiligen weiteren intelligenten Gerätes bereitstehen, ist vorgesehen die Passwortdatei mit den zuvor entschlüsselten Daten mittels des dem jeweiligem Gerät zugeordnetem geräteinterne Schlüssels zu verschlüsseln.

Mit der erfindungsgemäßen Vorrichtung ist nunmehr die Möglichkeit geschaffen, mittels des, vorzugsweise geräteinternen, Web- Servers des ersten Gerätes die Datei mit dem konfigurierten User Account über die Netzwerkverbindung zum Web- Client unter Vermeidung eines unbefugten Zugriffes, sicher zu übertragen, wobei das als Web-Server arbeitende erste Gerät in vorteilhafter Weise dafür vorgesehen ist den User Account über die vorhandene Netzwerkverbindung auf weitere im System angeordneten intelligenten Geräte gleichzeitig zu verteilen.

In einer vorteilhaften Ausführungsform der Erfindung ist vorgesehen, den User Account über den geräteinternen Web- Client des ersten Gerätes auf alle weiteren im System angeordneten Geräte eines gleichartigen Gerätetyps zu verteilen. Erfindungsgemäß ist vorgesehen, dass die intelligenten Geräte jeweils wenigstens ein, beispielsweise als Compact- Flash- Speicherkarte (CF-Card) ausgeführtes, zweites Speichermodul aufweisen, wobei das zweite Speichermodul über jeweils wenigstens ein Entschlüsselungsmodul und wenigstens ein Verschlüsselungsmodul mit dem ersten Speichermodul Daten austauscht. Zur Verschlüsselung bzw. Entschlüsselung der Daten, die vom bzw. zum ersten Speichermodul übertragen werden, ist der dem Gerät zugeordnete und, vorzugsweise im zweiten Speichermodul, angelegte jeweilige geräteinterne Schlüssel vorgesehen.

Erfindungsgemäß ist weiterhin vorgesehen, dass die intelligenten Geräte jeweils wenigstens ein, beispielsweise als RAM- Speicher ausgeführtes, erstes Speichermodul aufweisen, wobei das erste Speichermodul über jeweils wenigstens ein weiteres Entschlüsselungsmodul und wenigstens ein weiteres Verschlüsselungsmodul mit dem Web- Client, beispielsweise einem PC, Daten austauscht. Zur Verschlüsselung bzw. Entschlüsselung der Daten, die vom bzw. zum Web- Client übertragen werden, ist der jeweilige gemeinsame Schlüssel vorgesehen.

Somit sind Verschlüsselungsmodul und Entschlüsselungsmodul dafür vorgesehen, die vom Gerät zur Übertragung an den Web-Client vorgesehene den User Account aufweisende Datei vor ihrer Übertragung zu verschlüsseln bzw. die vom Web-Client empfangene den User Account aufweisende Datei, auch Passwortfile genannt, vor ihrer Ablage im Speichermodul zu entschlüsseln.

Nachfolgend ist beispielhaft dargestellt, wie eine Änderung der Zugriffsrechte bzw. Zugriffsdaten auf einem ersten Gerät konfiguriert und auf die weiteren Geräte im System verteilt wird.

Nachdem im ersten Gerät ein User Account (Benutzerkonto) angelegt und konfiguriert ist, also beispielsweise ein Name des Users, ein Passwort und/oder Zugriffsrechte festgelegt wurden, wird der so konfigurierte User Account als Passwortdatei im Speichermodul des ersten Gerätes abgelegt.

Für eine Änderung der Zugriffsrechte werden im Passwortfile die vorhandenen Informationen mit neuen Informationen, die sich durch die geänderten Zugangsdaten ergeben, überschrieben.

Im User Account sind der Namen des berechtigten Nutzers und das dem Nutzer zugeordnete Passwort entweder frei wählbar oder sie unterliegen vorab festgelegten Regeln, die üblicherweise von einer Passwortrichtlinie vorgegeben sind.

Die Informationen, die es erlauben auf den User Account zuzugreifen, sind im Passwortfile auf dem wiederbeschreibbaren ersten Speicher des Gerätes zur Verhinderung des Zugriffs verschlüsselt mit dem jeweiligen geräteinternem Schlüssel abgelegt.

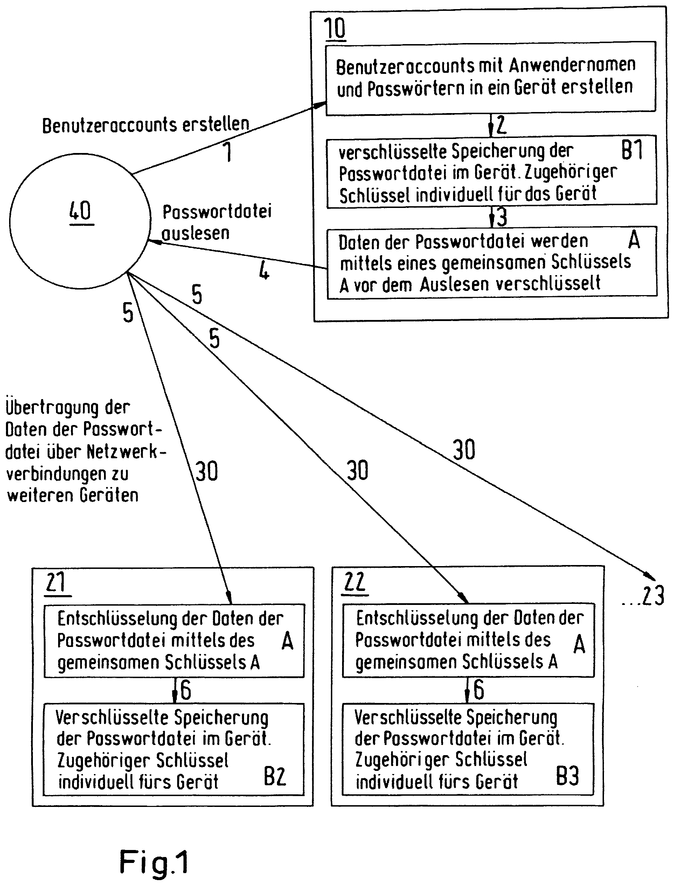

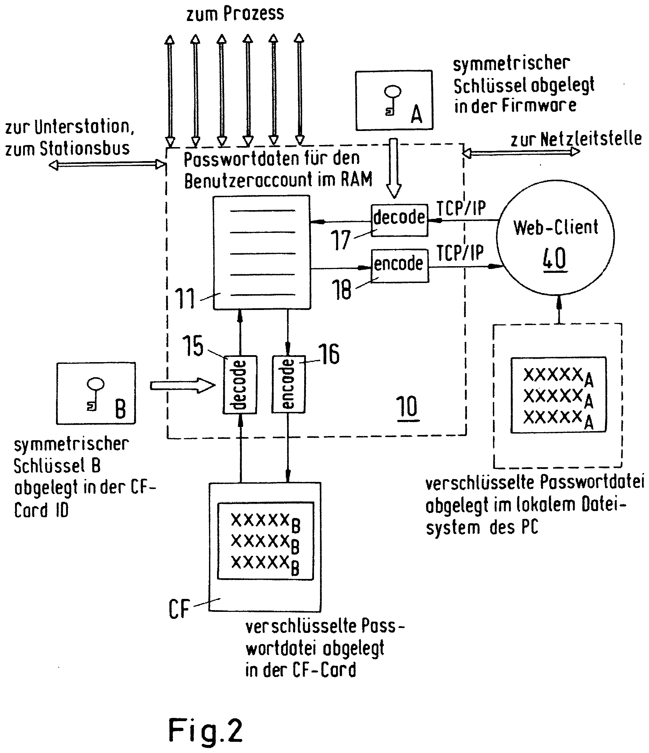

Anhand der in den Figuren 1 und 2 dargestellten Ausführungsbeispielen der Erfindung werden die Erfindung, vorteilhafte Ausgestaltungen und Verbesserungen der Erfindung, sowie weitere Vorteile näher erläutert und beschrieben.

Es zeigen:
- **Fig.** 1: einen beispielhaften Verfahrensablauf zur Konfigurierung und Verteilung eines Benutzer- Accounts auf intelligente Geräte innerhalb eines verteilten Netzleit- und Stationsautomatisierungssystems einer technischen Anlage, und
- **Fig.** 2: ein Ausführungsbeispiel der erfindungsgemäßen Vorrichtung gemäß dem erfindungsgemäßen Verfahrens, welche in einem verteilten fernüberwachten System zum Einsatz kommt.

Das in **Fig.** 1 dargestellte Verfahren zur Konfigurierung und Verteilung eines Benutzer- Accounts auf intelligente Geräte innerhalb eines verteilten Netzleit- und Stationsautomatisierungssystems umfasst ein erstes intelligentes Gerät 10, dass mittels eines Web- Clients 40 über eine Netzwerkverbindung 30 mit weiteren intelligenten Geräten 21, 22, 23 ... verbunden ist. Zu den intelligenten Geräten 10, 21, 22, 23 werden aus räumlich voneinander entfernten Teilen der Anlage Prozess- und/oder Anlagendaten übertragen.

Erfindungsgemäß werden in den im verteilten System angeordneten intelligenten Geräten 10, 21, 22, 23 jeweils geräteinterne individuelle Schlüssel B1, B2, B3, ... zur verschlüsselten Speicherung einer Passwortdatei und ein gemeinsamer Schlüssel A, welcher von allen intelligenten Geräten 10, 21, 22, 23 verstanden wird, abgelegt.

Die geräteinternen Schlüssel B1, B2, B3 ... werden in einem, vorzugsweise als Compact- Flash- Speicherkarte (CF-Card) ausgeführten Speichermodul des jeweiligen Gerätes 10, 21, 22, 23 abgelegt.

Der gemeinsame Schlüssel A wird von der auf den Geräten 10, 21, 22, 23 installierten Firmware bereitgestellt.

Der Verfahrensablauf zur Konfigurierung und Verteilung eines Benutzer- Accounts auf intelligente Geräte 10, 21, 22, 23 ist nachfolgend dargestellt.

In einem ersten Schritt 1 über den mit dem ersten Gerät 10 zusammenwirkenden Web-Client 40 in dem ersten Gerät 10 ein Benutzer- Account mit Anwendernamen und Passwörtern angelegt und konfiguriert.

Der Benutzer- Account wird in einem zweiten Schritt 2 mittels des individuellen geräteinternen Schlüssels B1 des ersten Gerätes 10 verschlüsselt als Passwortdatei, vorzugsweise im als Compact- Flash- Speicherkarte ausgeführten Speichermodul, angelegt.

Durch den Einsatz des als Compact- Flash- Speicherkarte ausgeführten Speichermoduls, welches ein Speichermedium ohne bewegliche Teile ist, bei dem die Informationen auf dem wiederbeschreibbaren Flash-Speicher dauerhaft gespeichert werden, wird in vorteilhafter Weise erreicht, dass die Daten des Passwortfiles auch unter ungünstigen Umgebungsbedingungen sicher aufbewahrt werden. Auch andere Speichermedien die fest bzw. direkt auf den Einschubkarten des Gerätes angeordnet sind, wie beispielsweise Secure Digital-Speicherkarten (SD- Card) sind für die Ablage des Passwortfiles im Gerät geeignet.

In einem weiteren Schritt 3 wird die die Passwortdatei vor dem Auslesen in den Web-Client (40) mittels des gemeinsamen Schlüssels A, welcher den weiteren im System angeordneten Geräten 21, 22, 23, ... bekannt ist bzw. von diesen verstanden wird, verschlüsselt und die nunmehr mit dem gemeinsamen Schlüssel A verschlüsselte Passwortdatei mit dem Benutzer- Account wird dem Web- Client 40 in einem nachfolgendem Schritt 4 zur Übertragung auf die weiteren intelligenten Geräte 21, 22, 23, ... bereitgestellt bzw. von diesem aus dem ersten Gerät 10 ausgelesen.

Erfindungsgemäß wird nunmehr über die Netzwerkverbindung 30 in einem folgendem Schritt 5 die verschlüsselte Passwortdatei vom Web- Client auf weitere im System angeordneten intelligente Geräte 21, 22, 23, ... gleichzeitig verteilt.

In einem letzten Schritt 6 werden die in der verschlüsselten Passwortdatei abgelegten Daten mittels des gemeinsamen Schlüssels A, welcher auch auf den weiteren Geräten 21, 22, 23, ... des verteilten Systems abgelegt ist, in den weiteren intelligenten Geräten 21, 22, 23 entschlüsselt und mittels der geräteinternen Schlüssel B1, B2, B3, ... die in den jeweiligen weiteren Geräten 21, 22, 23 abliegen, wird eine verschlüsselte Speicherung der Passwortdatei mit den zuvor entschlüsselten Daten im jeweils weiteren intelligentem Gerät 21, 22, 23, ... ausgeführt.

**Fig.** 2 zeigt beispielhaft eine Kommunikationseinheit einer unter der Bezeichnung Remote Terminal Unit bekannten Fernwirkunterstation 10 eines fernüberwachten verteilten Systems, die vorzugsweise auf einer Einschubkarte der RTU angeordnet ist und dafür vorgesehen ist über eine Netzwerkverbindung 30 mit einem Web- Client 40 Daten auszutauchen. Die gezeigte Vorrichtung ist zur Ausführung des erfindungsgemäßen Verfahrens geeignet.

Die erfindungsgemäße Vorrichtung zur Konfigurierung und Verteilung von Zugriffsrechten auf die intelligente Geräte 10, 21, 22, 23 innerhalb des fernüberwachten verteilten Systems eines technischen Prozesses oder einer technischen Anlage umfasst den wenigstens einen Web-Client 40 und daran über eine Netzwerkverbindung 30 angeschlossene, als Web- Server arbeitende, intelligente Geräte 10, 21, 22, 23, ...zu denen die aus räumlich voneinander entfernten Teilen der technischen Anlage bzw. des technischen Prozesses bereitgestellten Prozess- oder Anlagendaten in Echtzeit übertragbar sind.

Erfindungsgemäß sind für die Geräte 10, 21, 22, 23, welche über den Web-Client 40 mit dem in Fig. 1 beschriebenen Verfahren konfiguriert werden, jeweils ein erster Schlüssel A und ein weiterer Schlüssel B vorgesehen, wobei der erste Schlüssel A mit dem Web-Client 40 und dem ersten Speichermodul 11 zusammenwirkt und der weitere Schlüssel B mit dem ersten und dem zweiten Speichermodul 11, CF zusammenwirkt.

In der gezeigten Remote Terminal Unit 10, nachfolgend auch als erstes Gerät 10 bezeichnet, ist ein User Account (Benutzerkonto) angelegt und konfiguriert, der als Passwortdatei X in einem Speichermodul CF des ersten Gerätes 10 abgelegt ist. Die Erstellung des Benutzer- Accounts erfolgt mittels des Web- Clients 40, vorzugsweise eines PC's, der mit dem ersten Gerät 10 bei der Erstellung des Benutzer- Accounts zusammenwirkt. Dabei werden in den PC 40 die User- Daten, unter anderem den Namen des berechtigten Nutzers, ein zugeordnetes Passwort sowie Zugriffsrechte bzw. die Zugriffserlaubnis auf bestimmte Funktionen, eingegeben und als Passwortdatei in einem verschlüsselten Format im als Compact- Flash- Speicherkarte CF ausgeführten Speichermodul des ersten Gerätes 10 abgelegt. Die Verschlüsselung der Passwortdatei X wird unter Verwendung eines ersten Verschlüsselungsmoduls 16 mittels des geräteinternen Schlüssels B1 des ersten Gerätes 10 ausgeführt, der ebenfalls in der Compact- Flash- Speicherkarte CF abgelegt sein kann.

Mittels des geräteinternen Web- Servers des ersten Gerätes 10 ist die Passwortdatei X mit dem zuvor konfigurierten User Account über die Netzwerkverbindung 30 zum Web- Client 40, beispielsweise einem PC, übertragbar. Der Web-Client 40 ist dafür vorgesehen den User Account über die vorhandene Netzverbindung 30 auf weitere im System angeordneten, vorzugsweise als Web-Server arbeitenden, intelligenten Geräte 21, 22, 23 zu verteilen. Dabei kann vorgesehen sein den Benutzer- Account vom ersten Gerät 10 über den Web- Client 40 nur auf alle weiteren im System angeordneten Geräte eines gleichartigen Gerätetyps zu verteilen.

Weiterhin ist in den intelligenten Geräten 21, 22, 23 jeweils wenigstens ein zweites Verschlüsselungsmodul 18 und wenigstens ein zweites Entschlüsselungsmodul 17 integriert, wobei das zweite Verschlüsselungsmodul 18 dafür vorgesehen ist, die vom Gerät 10 zur Übertragung an den Web-Client 40 vorgesehene den User Account aufweisenden Daten vor ihrer Übertragung zum Web-Client 40 zu verschlüsseln und das zweite Entschlüsselungsmodul 18 dafür vorgesehen ist, die vom Web-Client 40 empfangene den User Account aufweisende Datei, nachfolgend auch Passwortfile genannt, vor ihrer Ablage im RAM-Speicher 11 zu entschlüsseln. Dazu wird der gemeinsame Schlüssel A verwendet.

In dem in **Fig.** 2 dargestellten Ausführungsbeispiel der erfindungsgemäßen Vorrichtung mit einem ersten Gerät 10, welches im verteilten fernüberwachten System zum Einsatz kommt, sind die Daten X mit dem Benutzer Account, welche mittels dem Web-Client 40 angelegt bzw. konfiguriert wurden, beispielsweise als Klartext in dem als zentrale Quelle wirkendem RAM-Speicher 11 abgelegt. Auf diesen Speicher 11 ist ein Zugriff von außerhalb des Gerätes nicht möglich.

Deshalb wird das Passwortfile des ersten Gerätes 10 bevor es zum Web-Client 40 des verteilten Systems übertragen wird, mit dem gemeinsamen, vorzugsweise symmetrischen, Schlüssel A kodiert. Der Schlüssel A ist vorzugsweise in einer auf dem Gerät 10 ablegbaren Firmware integriert. Dies erlaubt das so kodierte Passwortfile zu weiteren im System integrierten Geräten 21, 22, 23, bei denen in ihrer Firmware der gleichen Schlüssel A integriert ist, zu übertragen. Diese Geräte, die üblicherweise vom gleichen Gerätetyp sind, können so mit dem gleichen Passwortfile nachgerüstet werden. Wird ein symmetrischer Schlüssel verwendet, sind die Algorithmen zur Verschlüsselung und Entschlüsselung des Passwortfiles identisch.

Weiterhin ist zur Speicherung des Passwortfiles auf dem Flash-Speicher CF des Gerätes 10 der gemeinsamer Schlüssel B, auch als symmetrischer Schlüssel B ausführbar, vorgesehen, der beispielsweise mittels einer der Flash-Speicherkarte CF zugeordneten Identifikationsnummer, vorzugsweise der Seriennummer der Flash-Speicherkarte CF, die Identifizierung bzw. Kodierung des Passwortfiles auf diesem Gerät 10 ermöglicht.

Der weitere Schlüssel B ist so durch die der entsprechenden Flash-Speicherkarte zugeordnete Identifikationsnummer identifizierbar und jedes Gerät im System, welches die vorab genannten Merkmale aufweist, ist im System individuell gekennzeichnet. Somit ist mit dem vorab beschriebenen Verfahren das auf der Flash- Speicherkarte CF abgelegte mittels dem entsprechendem weiteren Schlüssel B und der zugehörigen Identifizierungsnummer kodierte Passwortfile gewährleistet, dass das individuelle Passwortfile des jeweiligen Gerätes nicht auf andere Geräte kopiert werden kann, die die Identifizierungsmerkmale (Identifizierungsnummer und Schlüssel) nicht aufweisen.

Weiterhin wird dadurch verhindert, dass das so kodierte Passwortfile auf anderen im verteilten System angeordneten Geräten nutzbar ist.

## Patentansprüche

1. Verfahren zur Konfigurierung und Verteilung von Zugriffsrechten auf intelligente Geräte (10), (21), (22), (23) innerhalb eines verteilten Systems in fernüberwachten Netzleit- und Stationsautomatisierungssystemen oder in abgeschlossenen Industrieanlagen eines technischen Prozesses oder einer technischen Anlage, wobei das verteilte System wenigstens ein erstes intelligentes Gerät (10) umfasst, dass mittels eines Web- Clients (40) über eine Netzwerkverbindung (30) mit weiteren intelligenten Geräten (21), (22), (23) verbunden wird und zu den intelligenten Geräten (10), (21), (22), (23) aus räumlich voneinander entfernten Teilen der technischen Anlage oder des technischen Prozesses bereitgestellte Prozess- und/oder Anlagendaten übertragen werden, und die intelligente Geräte (10), (21), (22), (23) jeweils wenigstens ein erstes Speichermodul (11) und jeweils ein zweites Speichermodul (CF) aufweisen, **dadurch gekennzeichnet, dass**
- im ersten Speichermodul (11) jeweils ein gemeinsamer Schlüssel (A) und im zweiten Speichermodul (CF) jeweils geräteinterne individuelle Schlüssel (B1, B2, B3, ...) abgelegt werden,
- über den Web-Client in dem ersten Gerät (10) ein Benutzer- Account angelegt und konfiguriert wird,
- mittels dem im ersten Gerät (10) abgelegten ersten geräteinternen Schlüssels (B1) vor einer Ablage des Benutzer- Accounts als Passwortdatei im zweiten Speichermodul (CF) eine Verschlüsselung des Benutzer- Accounts ausgeführt wird,
- mittels dem im ersten Gerät (10) abgelegten gemeinsamen Schlüssels (A) die Daten der Passwortdatei vor dem Auslesen in den Web- Client (40) verschlüsselt werden,
- mittels dem Web- Client (40) über die Netzwerkverbindung (30) die mittels des gemeinsamen Schlüssels (A) verschlüsselte Passwortdatei auf die weiteren intelligenten Geräte (21), (22), (23) verteilt wird,
- mittels dem in den weiteren intelligenten Geräten (21), (22), (23) abgelegten gemeinsamen Schlüssels (A) die in der verschlüsselten Passwortdatei abgelegten Daten entschlüsselt werden, und
- mittels dem weiteren geräteinternen Schlüssel (B1, B2, B3, ...) des jeweiligen weiteren intelligenten Gerätes (21), (22), (23) die Passwortdatei mit den zuvor entschlüsselten Daten vor ihrer Speicherung im jeweils weiteren intelligenten Gerät (21), (22), (23) verschlüsselt wird.

2. Verfahren nach Anspruch 1, **dadurch gekennzeichnet, dass** der gemeinsamer Schlüssel (A) von allen intelligenten Geräten (10), (21), (22), (23) verstanden wird.

3. Verfahren nach einem der Ansprüche 1, **dadurch gekennzeichnet, dass** der gemeinsame Schlüssel (A) nur von den intelligenten Geräten eines dem ersten Gerät entsprechenden gleichartigen Gerätetyps verstanden wird.

4. Verfahren nach Anspruch 3, **dadurch gekennzeichnet, dass** in den Geräten eines gleichartigen Gerätetyps in ihrer Firmware der gleiche gemeinsame Schlüssel (A) integriert ist.

5. Verfahren nach Anspruch 3 oder 4, **dadurch gekennzeichnet, dass** der Benutzer-Account über den Web- Client (40) und die Netzwerkverbindung (30) von einem ersten Gerät auf weitere im System Geräte eines gleichartigen Gerätetyps verteilt wird.

6. Verfahren nach einem der vorstehenden Ansprüche, **dadurch gekennzeichnet, dass** die Übertragung und Verteilung des Benutzer- Accounts auf die intelligenten Geräte des verteilten Systems mittels einer seriellen Datenübertragung oder über ein TCP/IP- Protokoll ausgeführt werden.

7. Vorrichtung zur Konfigurierung und Verteilung von Zugriffsrechten auf intelligente Geräte (10), (21), (22), (23) innerhalb eines verteilten Systems in fernüberwachten Netzleit- und Stationsautomatisierungssystemen oder in abgeschlossenen Industrieanlagen eines technischen Prozesses oder einer technischen Anlage, wobei das verteilte System wenigstens ein erstes intelligentes Gerät (10) umfasst, dass mittels eines Web- Clients (40) über eine Netzwerkverbindung (30) mit weiteren intelligenten Geräten (21), (22), (23) verbunden ist, zu den intelligenten Geräten (10), (21), (22), (23) aus räumlich voneinander entfernten Teilen der technischen Anlage oder des technischen Prozesses bereitgestellte Prozess- und/oder Anlagendaten übertragbar sind, und die intelligenten Geräte (10), (21), (22), (23) jeweils wenigstens ein erstes Speichermodul (11) und jeweils ein zweites Speichermodul (CF) aufweisen, **dadurch gekennzeichnet, dass**
- im ersten Speichermodul (11) jeweils ein gemeinsamer Schlüssel (A) abgelegt ist und im zweiten Speichermodul (CF) jeweils geräteinterne individuelle Schlüssel (B1, B2, B3, ...) abgelegt sind,
- über den Web-Client (40) in dem ersten Gerät (10) ein Benutzer- Account angelegt und konfiguriert ist,
- der im ersten Gerät (10) abgelegte erste geräteinterne Schlüssel (B1) vor einer Ablage des Benutzer- Accounts als Passwortdatei im zweiten Speichermodul (CF) eine Verschlüsselung der Passwortdatei ausgeführt,
- der im ersten Gerät (10) abgelegte gemeinsame Schlüssels (A) die Daten der Passwortdatei vor dem Auslesen in den Web- Client (40) verschlüsselt,
- der Web- Client (40) über die Netzwerkverbindung (30) die mittels des gemeinsamen Schlüssels (A) verschlüsselte Passwortdatei auf die weiteren intelligenten Geräte (21), (22), (23) verteilt,
- der in den weiteren intelligenten Geräten (21), (22), (23) abgelegte gemeinsame Schlüssel (A) die in der verschlüsselten Passwortdatei abgelegten Daten entschlüsselt, und
- der weitere geräteinterne Schlüssel (B1, B2, B3, ...) des jeweiligen weiteren intelligenten Gerätes (21), (22), (23) die Passwortdatei mit den zuvor entschlüsselten Daten vor ihrer Speicherung im jeweils weiteren intelligenten Gerät (21), (22), (23) verschlüsselt.

8. Vorrichtung nach Anspruch 7, **dadurch gekennzeichnet, dass** der Benutzer- Account über den geräteinternen Web- Server des ersten Gerätes (10) und über die Netzwerkverbindung (30) auf weitere im System angeordneten weitere Geräte (21), (22), (23) eines gleichartigen Gerätetyps verteilbar ist.

9. Vorrichtung nach Anspruch 7 oder 8, **dadurch gekennzeichnet, dass** im Benutzer-Account ein Name des Users, ein Passwort und/oder Zugriffsrechte abgelegt sind.

10. Vorrichtung nach einem der Ansprüche 7 bis 9, **dadurch gekennzeichnet, dass** die Speichermodule (11, CF) jeweils als Speichermedium ohne bewegliche Teile, beispielsweise als Compact- Flash- Speicherkarte, ausgeführt sind, und fest bzw. direkt im Gerät integriert sind.

11. Vorrichtung nach einem der Ansprüche 7 bis 10, **dadurch gekennzeichnet, dass** die intelligenten Geräte (10), (21), (22), (23) jeweils wenigstens ein als Compact-Flash- Speicherkarte ausgeführtes zweites Speichermodul (CF) aufweisen, wobei das zweite Speichermodul (CF) über jeweils wenigstens ein Entschlüsselungsmodul (15) und wenigstens ein Verschlüsselungsmodul (16) mit dem ersten Speichermodul (11) Daten austauscht und zur Verschlüsselung bzw. Entschlüsselung der Daten, die vom bzw. zum ersten Speichermodul (11) übertragen werden, der dem Gerät zugeordnete geräteinterne Schlüssel (B1, B2, B3, ...) vorgesehen ist.

12. Vorrichtung nach einem der Ansprüche 7 bis 11, **dadurch gekennzeichnet, dass** die intelligenten Geräte (10), (21), (22), (23) jeweils wenigstens ein als RAM- Speicher ausgeführtes, erstes Speichermodul (11) aufweisen, wobei das erste Speichermodul (11) über jeweils wenigstens ein weiteres Entschlüsselungsmodul (18) und wenigstens ein weiteres Verschlüsselungsmodul (17) mit dem Web- Client (40) Daten austauscht und zur Verschlüsselung bzw. Entschlüsselung der Daten, die vom bzw. zum Web- Client (40) übertragen werden der jeweilige gemeinsame Schlüssel (A) vorgesehen ist.

13. Verwendung des Verfahrens und der Vorrichtung nach einem der vorherigen Ansprüche in fernüberwachten Netzleit- und Stationsautomatisierungssystemen, die für Versorgungssysteme für beispielsweise Strom, Gas, Wasser, Öl oder Fernwärme eingesetzt werden, aber auch in abgeschlossenen Industrieanlagen.

## Claims

1. Method for configuring and distributing access rights among intelligent devices (10), (21), (22), (23) within a distributed system in remotely monitored network control and station automation systems or in self-contained industrial installations of a technical process or technical installation, wherein the distributed system comprises at least a first intelligent device (10) which is connected to further intelligent devices (21), (22), (23) via a network connection (30) by means of a web client (40), and process and/or installation data provided from physically mutually remote parts of the technical installation or technical process are transmitted to the intelligent devices (10), (21), (22), (23), and the intelligent devices (10), (21), (22), (23) in each case have at least a first memory module (11) and in each case a second memory module (CF),
**characterized in that**
- a shared key (A) is stored in each case in the first memory module (11) and device-internal, individual keys (B1, B2, B3, ...) are stored in each case in the second memory module (CF),
- a user account is created and configured in the first device (10) via the web client,
- the first device-internal key (B1) stored in the first device (10) is used to carry out an encryption of the user account prior to a storage of the user account as a password file in the second memory module (CF),
- the shared key (A) stored in the first device (10) is used to encrypt the data of the password file prior to the reading into the web client (40),
- the web client (40) is used to distribute the password file encrypted by means of the shared key (A) via the network connection (30) among the further intelligent devices (21), (22), (23),
- the shared key (A) stored in the further intelligent devices (21), (22), (23) is used to decrypt the data stored in the encrypted password file, and
- the further device-internal key (B1, B2, B3, ...) of the respective further intelligent device (21), (22), (23) is used to encrypt the password file with the previously decrypted data prior to its storage in the respective further intelligent device (21), (22), (23).

2. Method according to Claim 1, **characterized in that** the shared key (A) is understood by all intelligent devices (10), (21), (22), (23).

3. Method according to one of Claims 1, **characterized in that** the shared key (A) is understood only by the intelligent devices of a similar device type corresponding to the first device.

4. Method according to Claim 3, **characterized in that** the same shared key (A) is integrated in the firmware of the devices of a similar device type.

5. Method according to Claim 3 or 4, **characterized in that** the user account is distributed by a first device via the web client (40) and the network connection (30) among further devices of a similar device type disposed in the system.

6. Method according to one of the preceding claims, **characterized in that** the transmission and distribution of the user account among the intelligent devices of the distributed system is carried out by means of the serial data transmission or via a TCP/IP protocol.

7. Device for configuring and distributing access rights among intelligent devices (10), (21), (22), (23) within a distributed system in remotely monitored network control and station automation systems or in self-contained industrial installations of a technical process or technical installation, wherein the distributed system comprises at least a first intelligent device (10) which is connected to further intelligent devices (21), (22), (23) via a network connection (30) by means of a web client (40), process and/or installation data provided from physically mutually remote parts of the technical installation or technical process can be transmitted to the intelligent devices (10), (21), (22), (23) and the intelligent devices (10), (21), (22), (23) in each case have at least a first memory module (11) and in each case a second memory module (CF), **characterized in that**
- a shared key (A) is stored in each case in the first memory module (11) and device-internal, individual keys (B1, B2, B3, ...) are stored in each case in the second memory module (CF),
- a user account is created and configured in the first device (10) via the web client (40),
- the first device-internal key (B1) stored in the first device (10) carries out an encryption of the password file prior to a storage of the user account as a password file in the second memory module (CF),
- the shared key (A) stored in the first device (10) encrypts the data of the password file prior to the reading into the web client (40),
- the web client (40) distributes the password file encrypted by means of the shared key (A) via the network connection (30) among the further intelligent devices (21), (22), (23),
- the shared key (A) stored in the further intelligent devices (21), (22), (23) decrypts the data stored in the encrypted password file, and
- the further device-internal key (B1, B2, B3, ...) of the respective further intelligent device (21), (22), (23) encrypts the password file with the previously decrypted data prior to its storage in the respective further intelligent device (21), (22), (23).

8. Device according to Claim 7, **characterized in that** the user account is distributable via the device-internal web server of the first device (10) and via the network connection (30) among further devices (21), (22), (23), of a similar device type disposed in the system.

9. Device according to Claim 7 or 8, **characterized in that** a user name, password and/or access rights are stored in the user account.

10. Device according to one of Claims 7 to 9, **characterized in that** the memory modules (11, CF) are in each case designed as a memory medium without moving parts, for example as a Compact Flash memory card, and are permanently or directly integrated into the device.

11. Device according to one of Claims 7 to 10, **characterized in that** the intelligent devices (10), (21), (22), (23) in each case have at least a second memory module (CF) designed as a Compact Flash memory card, wherein the second memory module (CF) exchanges data with the first memory module (11) in each case via at least one decryption module (15) and at least one encryption module (16), and the device-internal key (B1, B2, B3, ...) allocated to the device is provided to encrypt and decrypt the data transmitted from and to the first memory module (11).

12. Device according to one of Claims 7 to 11, **characterized in that** the intelligent devices (10), (21), (22), (23) in each case have at least a first memory module (11) designed as a RAM memory, wherein the first memory module (11) exchanges data with the web client (40) in each case via at least one further decryption module (18) and at least one further encryption module (17), and the respective shared key (A) is provided to encrypt and decrypt the data transmitted from and to the web client (40).

13. Use of the method and the device according to one of the preceding claims in remotely monitored network control and station automation systems, which are used for supply systems for, for example, electricity, gas, water, oil or district heating, but also in self-contained industrial installations.

## Revendications

1. Procédé de configuration et d'attribution de droits d'accès à des appareils intelligents (10), (21), (22), (23) à l'intérieur d'un système distribué dans un système d'automatisation de gestion de réseau et de station surveillé à distance ou dans des installations industrielles fermées d'un processus technique ou d'une installation technique, dans lequel le système distribué comprend au moins un premier appareil intelligent (10) qui est connecté au moyen d'un client Web (40) par l'intermédiaire d'une liaison réseau (30) à d'autres appareils intelligents (21), (22), (23) et des données de processus et/ou d'installation fournies à partir de parties spatialement éloignées les unes des autres de l'installation technique ou du processus technique sont transmises aux appareils intelligents (10), (21), (22), (23), et les appareils intelligents (10), (21), (22), (23) comportent au moins un premier module de mémoire (11) respectif et un deuxième module de mémoire (CF) respectif,
**caractérisé en ce que**
- une clé commune (A) est respectivement stockée dans le premier module (11) et une clé individuelle interne à l'appareil (B1, B2, B3,...) est respectivement stockée dans le deuxième module de mémoire (CF),
- un compte d'utilisateur est stocké et configuré par l'intermédiaire du client Web dans le premier appareil (10),
- un chiffrement du compte d'utilisateur est effectué dans le deuxième module de mémoire (CF) au moyen de la première clé interne à l'appareil (B1) stockée dans le premier appareil (10) avant un stockage du compte d'utilisateur sous la forme d'un fichier de mots de passe,
- les données du fichier de mots de passe sont chiffrées au moyen de la clé commune (A) stockée dans le premier appareil (10) avant la lecture effectuée dans le client Web (40),
- le fichier de mots de passe chiffré au moyen de la clé commune (A) est distribué aux autres appareils intelligents (21), (22), (23) au moyen du client Web (40) sur la liaison réseau (30),
- les données stockées dans le fichier de mots de passe chiffré sont déchiffrées au moyen de la clé commune (A) stockée dans les autres appareils intelligents (21), (22), (23), et
- le fichier de mots de passe comportant les données précédemment déchiffrées est chiffré avant son stockage dans l'autre appareil intelligent (21), (22), (23) respectif au moyen de l'autre clé interne à l'appareil (B1, B2, B3, ...) de l'autre appareil intelligent (21), (22), (23) respectif.

2. Procédé selon la revendication 1, **caractérisé en ce que** la clé commune (A) est comprise par tous les appareils intelligents (10), (21), (22), (23).

3. Procédé selon l'une des revendications 1, **caractérisé en ce que** la clé commune (A) n'est comprise que par les appareils intelligents d'un type d'appareil similaire correspondant au premier appareil.

4. Procédé selon la revendication 3, **caractérisé en ce qu'**une même clé commune (A) est intégrée aux appareils d'un type d'appareil similaire dans leur micrologiciel.

5. Procédé selon la revendication 3 ou 4, **caractérisé en ce que** le comte utilisateur est distribué par l'intermédiaire du client Web (40) et de la liaison réseau (30) d'un premier appareil à d'autres appareils du système d'un type d'appareil similaire.

6. Procédé selon l'une quelconque des revendications précédentes, **caractérisé en ce que** la transmission et la distribution du compte d'utilisateur aux appareils intelligents du système distribué sont effectuées au moyen d'une transmission de données série ou par l'intermédiaire d'un protocole TCP/IP.

7. Dispositif de configuration et d'attribution de droits d'accès à des appareils intelligents (10), (21), (22), (23) à l'intérieur d'un système distribué dans un système d'automatisation de gestion de réseau et de station surveillé à distance ou dans des installations industrielles fermées d'un processus technique ou d'une installation technique, dans lequel le système distribué comprend au moins un premier appareil intelligent (10) qui est connecté au moyen d'un client Web (40) par l'intermédiaire d'une liaison réseau (30) à d'autres appareils intelligents (21), (22), (23), des données de processus et/ou d'installation fournies à partir de parties spatialement éloignées les unes des autres de l'installation technique ou du processus technique peuvent être transmises aux appareils intelligents (10), (21), (22), (23), et les appareils intelligents (10), (21), (22), (23) comportent au moins un premier module de mémoire (11) respectif et un deuxième module de mémoire (CF) respectif,
**caractérisé en ce que**
- une clé commune (A) est respectivement stockée dans le premier module (11) et une clé individuelle interne à l'appareil (B1, B2, B3,...) est respectivement stockée dans le deuxième module de mémoire (CF),
- un compte d'utilisateur est stocké et configuré par l'intermédiaire du client Web (40) dans le premier appareil (10),
- la première clé interne à l'appareil (B1) stockée dans le premier appareil (10) effectue, avant un stockage du compte d'utilisateur sous la forme d'un fichier de mots de passe dans le deuxième module de mémoire (CF), un chiffrement dudit fichier de mots de passe,
- la clé commune (A) stockée dans le premier appareil (10) chiffre les données du fichier de mots de passe avant la lecture effectuée dans le client Web (40),
- le client Web (40) distribue le fichier de mots de passe chiffré au moyen de la clé commune (A) par l'intermédiaire de la liaison réseau (30) aux autres appareils intelligents (21), (22), (23),
- la clé commune (A) stockée dans les autres appareils intelligents (21), (22), (23) déchiffre les données stockées dans le fichier de mots de passe chiffré, et
- l'autre clé interne à l'appareil (B1, B2, B3, ...) de l'autre appareil intelligent (21), (22), (23) respectif chiffre le fichier de mots de passe comportant les données précédemment déchiffrées avant son stockage dans l'autre appareil intelligent (21), (22), (23).

8. Dispositif selon la revendication 7, **caractérisé en ce que** le compte d'utilisateur peut être distribué par l'intermédiaire du serveur Web interne à l'appareil du premier appareil (10) et par l'intermédiaire de la liaison réseau (30) à d'autres appareils (21), (22), (23) d'un type d'appareil similaire disposés dans le système.

9. Dispositif selon la revendication 7 ou 8, **caractérisé en ce qu'**un nom de l'utilisateur, un mot de passe et/ou des droits d'accès sont stockés dans le compte d'utilisateur.

10. Dispositif selon l'une quelconque des revendications 7 à 9, **caractérisé en ce que** les modules de mémoire (11, CF) sont respectivement mis en oeuvre sous la forme d'un support de stockage sans parties mobiles, par exemple sous la forme d'une carte mémoire de type compact flash et **en ce qu'**ils sont intégrés à l'appareil de manière fixe ou directe.

11. Dispositif selon l'une quelconque des revendications 7 à 10, **caractérisé en ce que** les appareils intelligents (10), (21), (22), (23) comportent respectivement un deuxième module de mémoire (CF) réalisé sous la forme d'une carte mémoire de type compact flash, dans lequel le deuxième module de mémoire (CF) échange des données avec le premier module de mémoire (11) respectivement par l'intermédiaire d'au moins un module de déchiffrement (15) et d'au moins un module de chiffrement (16) et dans lequel il est prévu des clés internes à l'appareil (B1, B2, B3, ...) associées à l'appareil pour le chiffrement ou le déchiffrement des données qui sont transmises depuis ou vers le premier module de mémoire (11).

12. Dispositif selon l'une quelconque des revendications 7 à 11, **caractérisé en ce que** les appareils intelligents (10), (21), (22), (23) comportent respectivement au moins un premier module de mémoire (11) réalisé sous la forme d'une mémoire RAM, dans lequel le premier module de mémoire (11) échange des données avec le client Web (40) respectivement par l'intermédiaire d'au moins un autre module de déchiffrement (18) et d'au moins un autre module de chiffrement (17) et dans lequel la clé commune (A) respective est prévue pour le chiffrement ou le déchiffrement des données qui sont transmises depuis ou vers le client Web (40).

13. Utilisation du procédé et du dispositif selon l'une quelconque des revendications précédentes dans des systèmes d'automatisation de gestion de réseau et de station surveillés à distance qui sont mis en oeuvre pour des systèmes d'alimentation par exemple en courant, en gaz, en eau, en combustible ou en chauffage urbain, mais également dans des installations industrielles fermées.
